(19) Europäisches Patentamt / European Patent Office / Office européen des brevets

(11) **EP 4 391 642 A1**

(12) **EUROPEAN PATENT APPLICATION**
published in accordance with Art. 153(4) EPC

(43) Date of publication:
**26.06.2024 Bulletin 2024/26**

(21) Application number: **22858453.8**

(22) Date of filing: **15.08.2022**

(51) International Patent Classification (IPC):
**H04W 28/04** (2009.01)   **H04W 4/06** (2009.01)
**H04W 52/18** (2009.01)

(52) Cooperative Patent Classification (CPC):
**H04W 4/06; H04W 28/04; H04W 52/18**

(86) International application number:
**PCT/JP2022/030913**

(87) International publication number:
**WO 2023/022135 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.08.2021 JP 2021132259**

(71) Applicant: **NTT DOCOMO, INC.**
**Tokyo 100-6150 (JP)**

(72) Inventors:
• **YOSHIOKA, Shohei**
  **Tokyo 100-6150 (JP)**
• **MATSUMURA, Yuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND WIRELESS COMMUNICATION METHOD**

(57)    A terminal comprises: a reception unit that receives data via a downlink channel in a data delivery for a plurality of terminals; a transmission unit that transmits a feedback on the data; and a control unit that changes a parameter used for transmitting the feedback according to whether a method for transmitting the feedback is a first method or a second method, wherein the first method is a method for transmitting a negative response without transmitting an affirmative response, and the second method is a method for transmitting the affirmative response and the negative response.

FIG.4

**Description**

[Technical Field]

The present disclosure relates to a terminal and a radio communication method corresponding to a multicast/broadcast service.

[Background Art]

The 3rd Generation Partnership Project (3GPP) has specified the 5th generation mobile communication system (Also called 5G, New Radio (NR), or Next Generation (NG)) and is also in the process of specifying the next generation called Beyond 5G, 5G Evolution or 6G.
Release 17 of the 3GPP covers simultaneous data transmission (also called delivery) services (tentatively called Multicast and Broadcast Services (MBS)) to specific or unspecified terminals (User Equipment, UE) in NR (Non-Patent Literature 1).
The MBS supports, for example, a first method (NACK-only feedback) for transmitting a negative response (NACK) without transmitting an affirmative response (ACK) and a second method (ACK/NACK feedback) for transmitting both an affirmative response (ACK) and a negative response (NACK) as a method (HARQ feedback) for transmitting feedback on data received by the UE.

[Citation List]

[Non-Patent Literature]

[Non-Patent Literature 1]
"New Work Item on NR support of Multicast and Broadcast Services," RP-193248, 3GPP TSG RAN Meeting #86, 3GPP, December 2019

[Summary of Invention]

An aspect of the disclosure is a terminal comprising: a reception unit that receives data via a downlink channel in a data delivery for a plurality of terminals; a transmission unit that transmits a feedback on the data; and a control unit that changes a parameter used for transmitting the feedback according to whether a method for transmitting the feedback is a first method or a second method, wherein the first method is a method for transmitting a negative response without transmitting an affirmative response, and the second method is a method for transmitting the affirmative response and the negative response.
An aspect of the disclosure is a radio communication method comprising: a step A of receiving data via a downlink channel in a data delivery for a plurality of terminals; a step B of transmitting a feedback on the data; and a step C of changing a parameter used for transmitting the feedback according to whether a method for transmitting the feedback is a first method or a second method; wherein the first method is a method for transmitting a negative response without transmitting an affirmative response, and the second method is a method for transmitting the affirmative response and the negative response.

[Brief Description of Drawings]

[FIG. 1] FIG. 1 is an overall schematic diagram of the radio communication system 10.
[FIG. 2] FIG. 2 is a diagram showing the frequency range used in the radio communication system 10.
[FIG. 3] FIG. 3 is a diagram showing a configuration example of a radio frame, a sub-frame and a slot used in the radio communication system 10.
[FIG. 4] FIG. 4 is a functional block configuration diagram of the UE200.
[FIG. 5] FIG. 5 is a functional block configuration diagram of the gNB100.
[FIG. 6] FIG. 6 is a diagram showing a configuration example of the PTM transmission system 1 and the PTM transmission system 2.
[FIG. 7] FIG. 7 is a diagram for explaining the change of the parameter (k1).
[FIG. 8] FIG. 8 is a diagram for explaining the change of the parameter (k1).
[FIG. 9] FIG. 9 is a diagram for explaining the change of the parameter (k1).

[FIG. 10] FIG. 10 is a diagram showing an example of the hardware configuration of the gNB100 and the UE200.

[Modes for Carrying out the Invention]

Exemplary embodiments of the present invention are explained below with reference to the accompanying drawings. The same functions and configurations are denoted by the same or similar reference numerals, and their descriptions are omitted accordingly.

[Embodiments]

(1) Overall schematic configuration of the radio communication system

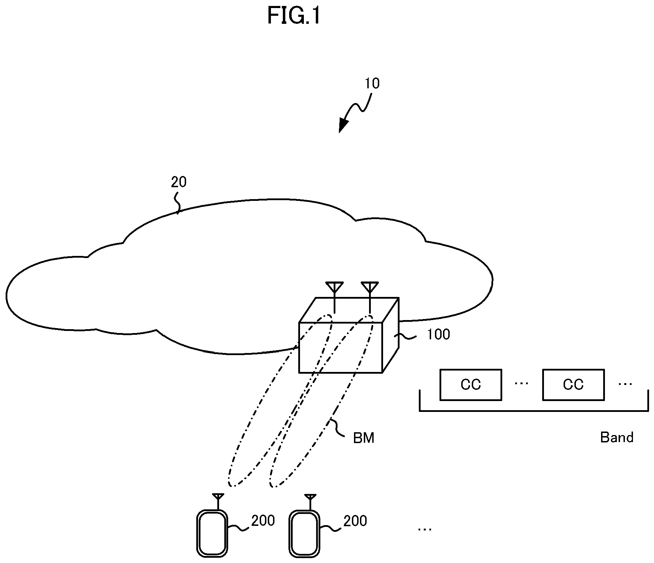

FIG. 1 is an overall schematic configuration diagram of the radio communication system 10 according to the embodiment. The radio communication system 10 is a radio communication system according to 5G New Radio (NR) and includes a Next Generation-Radio Access Network 20 (hereinafter referred to as NG-RAN20 and a terminal 200 (UE (User Equipment) 200).

The radio communication system 10 may be a radio communication system according to a system called Beyond 5G, 5G Evolution or 6G.

The NG-RAN20 includes a base station 100 (gNB100). The specific configuration of the radio communication system 10 including the number of the gNB100 and the UE200 is not limited to the example shown in FIG. 1.

The NG-RAN20 actually includes a plurality of NG-RAN Nodes, specifically a gNB (or ng-eNB), connected to a core network (5GC, not shown) according toto 5G. Note that the NG-RAN20 and the 5GC may be referred to simply as "networks ".

The gNB100 is a radio base station in accordance with 5G and performs radio communication in accordance with the UE200 a and 5G. The gNB100 and the UE200 can support Massive MIMO (Multiple-Input Multiple-Output), which generates a more directional beam BM by controlling radio signals transmitted from multiple antenna elements; Carrier Aggregation (CA), which uses multiple component carriers (CCs) bundled together; and Dual Connectivity (DC), which communicates to two or more transport blocks simultaneously between the UE and each of two NG-RAN Nodes.

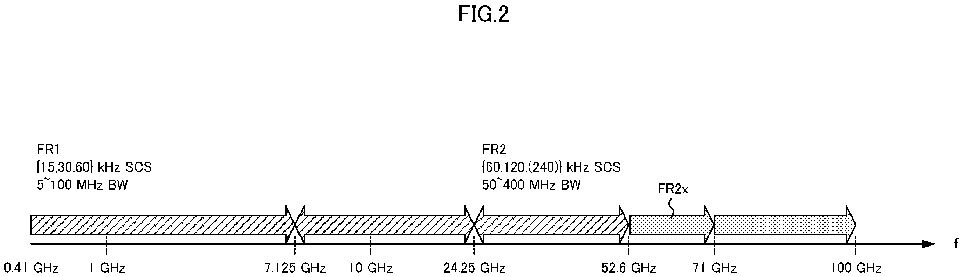

The radio communication system 10 also supports multiple frequency range (FRs). FIG. 2 shows the frequency ranges used in radio communication system 10.

As shown in FIG. 2, the radio communication system 10 corresponds to FR1 FRand FR2. The frequency bands of each FR are as follows.

- FR1:410 MHz -7.125 GHz
- FR2:24.25 GHz~52.6 GHz

FR1 uses 15, 30 or 60 kHz sub-carrier spacing (SCS) and may use a 5-100 MHz bandwidth (BW). FR2 is higher frequency than FR1 and may use 60 or 120 kHz (may include 240 kHz) SCS and may use a 50-400 MHz bandwidth (BW).

SCS may be interpreted teas numerology. Numerology is defined in 3GPP TS38.300 and corresponds to one subcarrier interval in the frequency domain.

In addition, the radio communication system 10 corresponds to a higher frequency band than the frequency band of FR2. Specifically, the radio communication system 10 corresponds to a frequency band exceeding 52.6 GHz and up to 71 GHz or 114.25 GHz. Such a high frequency band may be referred to as "FR 2 x" for convenience.

In order to solve the problem that the influence of phase noise increases in the high frequency band, a cyclic prefix-orthogonal frequency division multiplexing (CP-OFDM)/discrete Fourier transform-spread (DFT-S-OFDM) with a larger sub-carrier spacing (SCS) may be applied when a band exceeding 52H.6 GHz is used.

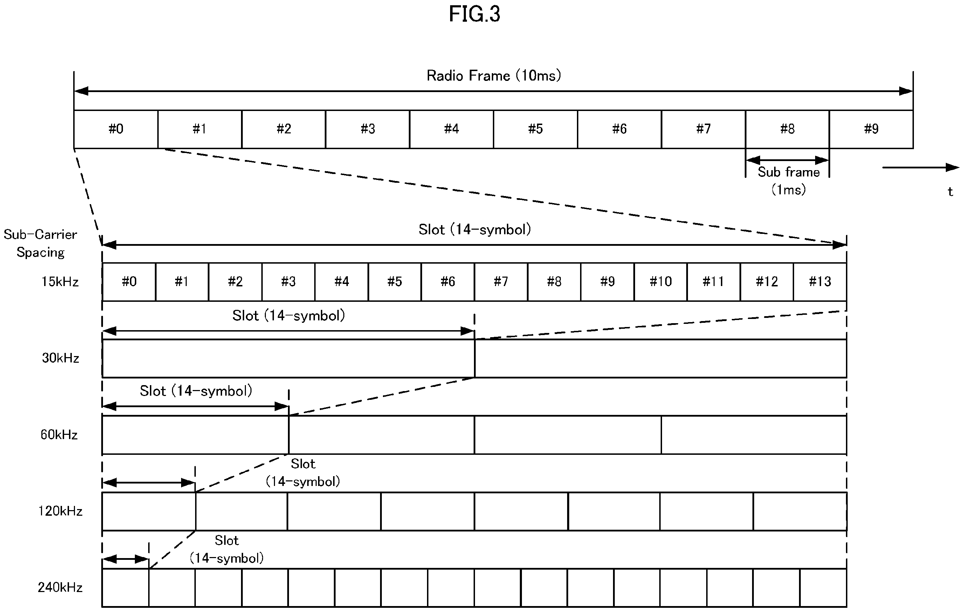

FIG. 3 shows a configuration example of a radio frame, a sub-frame and a slot used in radio communication system 10.

As shown in FIG. 3, a slot consists of 14 symbols, and the larger (wider) the SCS, the shorter the symbol per period (and slot period). The SCS is not limited to the interval (frequency) shown in FIG. 3. For example, 480 kHz, 960 kHz, and the like may be used.

The number of symbols constituting 1 slot may not necessarily be 14 symbols (for example, 28 symbols, 56 symbols). Furthermore, the number of slots per subframe may vary depending on the SCS.

Note that the time direction (t) shown in FIG. 3 may be referred to as a time domain, symbol period, symbol time, etc. The frequency direction may be referred to as a frequency domain, resource block, subcarrier, bandwidth part (BWP), etc.

A DMRS is a type of reference signal and is prepared for various channels. In this context, unless otherwise specified, a DMRS for a downlink data channel, specifically a PDSCH (Physical Downlink Shared Channel), may be used. However, a DMRS for an uplink data channel, specifically a PUSCH (Physical Uplink Shared Channel), may be interpreted in the same way as a DMRS for a PDSCH.

The DMRS may be used for channel estimation in a device, e.g., UE200, as pas rt of a coherent demodulation. The DMRS may be present only in the resource block (RB) used for PDSCH transmission.

The DMRS may have more than one mapping type. Specifically, the DMRS may have a mapping type A and a mapping type B. In a mapping type A, the first DMRS is located in the second or third symbol of the slot. In a mapping type A, the DMRS may be mapped relative to the slot boundary regardless of where the actual data transmission is initiated in the slot. The reason why the first DMRS is placed in the second or third symbol of the slot may be interpreted as placing the first DMRS after the control resource sets (CORESET).

In mapping type B, the first DMRS may be placed in the first symbol of the data allocation. That is, the location of the DMRS may be given relative to where the data is located, rather thana relative to the slot boundary.

The DMRS may also have more than one type. Specifically, the DMRS may have Type 1 and Type 2. Type 1 and Type 2 differ in the maximum number of mapping and orthogonal reference signals in the frequency domain. Type 1 can output up to four orthogonal signals in single-symbol DMRS, and Type 2 can output up to eight orthogonal signals in double-symbol DMRS.

(2) Radio communication system functional block configuration

Next, a functional block configuration of the radio communication system 10 will be described.

First, a functional block configuration of the UE200 will be described.

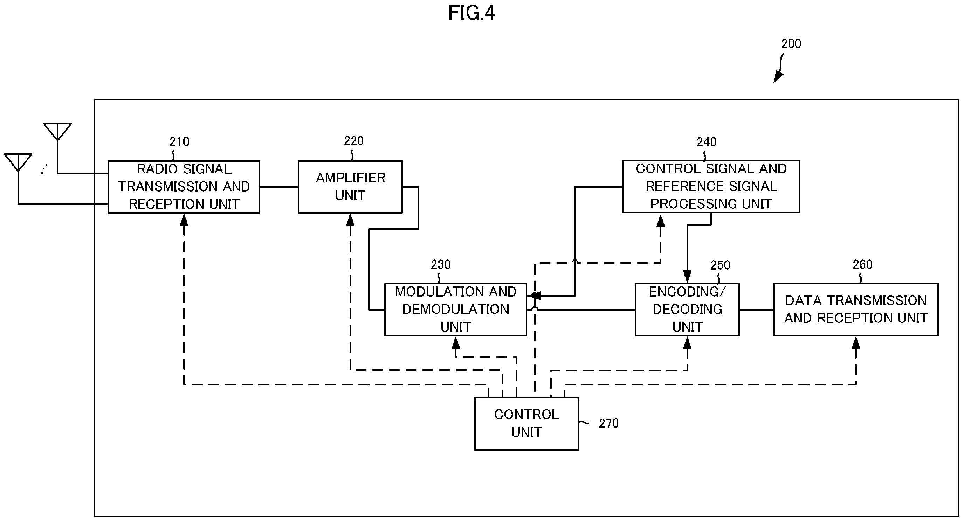

FIG. 4 is a functional block configuration diagram of the UE200. As shown in FIG. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with the NR. The radio signal transmission and reception unit 210 corresponds to a Massive MIMO, a CA using a plurality of CCs bundled together, and a DC that simultaneously communicates between a UE and each of two NG-RAN Nodes.

The amplifier unit 220 is composed of a PA (Power Amplifier)/LNA (Low Noise Amplifier) or the like. The amplifier unit 220 amplifies the signal output from the modulation and demodulation unit 230 to a predetermined power level. The amplifier unit 220 amplifies the RF signal output from radio signal transmission and reception unit 210.

The modulation and demodulation unit 230 performs data modulation/demodulation, transmission power setting, resource block allocation, etc. for each predetermined communication destination (gNB100 or other gNB). In the modulation and demodulation unit 230, Cyclic Prefix-Orthogonal Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing related to various control signals transmitted and received by the UE200 and various reference signals transmitted and received by the UE200.

Specifically, the control signal and reference signal processing unit 240 receives various control signals transmitted from the gNB100 via a predetermined control channel, for example a radio resource control layer (RRC) control signal. The control signal and reference signal processing unit 240 also transmits various control signals to the gNB100 via a predetermined control channel.

The control signal and reference signal processing unit 240 executes processing using a reference signal (RS) such as a demodulation reference signals (DMRS) and a phase tracking reference signal (PTRS).

The DMRS is a known reference signal (pilot signal) between a base station and a terminal of each terminal for estimating a fading channel used for data demodulation. The PTRS is a reference signal of each terminal for estimating phase noise, which is a problem in a high frequency band.

In addition to the DMRS and the PTRS, the reference signal may include a Channel State Information-Reference Signal (CSI-RS), a Sounding Reference Signal (SRS), and a Positioning Reference Signal (PRS) for position information.

The channel may include a control channel and a data channel. The control channel may include PDCCH (Physical Downlink Control Channel), PUCCH (Physical Uplink Control Channel), RACH (Random Access Channel), Downlink Control Information (DCI) including Random Access Radio Network Temporary Identifier (RA-RNTI), and Physical Broadcast Channel (PBCH).

The data channel may also include PDSCH (Physical Downlink Shared Channel) and PUSCH (Physical Uplink Shared Channel). Data means data transmitted over a data channel. A data channel may be read as a shared channel.

Here, the control signal and reference signal processing unit 240 may receive downlink control information (DCI). The DCI includes existing fields for storing DCI Formats, Carrier indicator (CI), BWP indicator, Frequency Domain Resource Assignment (FDRA), Time Domain Resource Assignment (TDRA), Modulation and Coding Scheme (MCS), HPN (HARQ Process Number), New Data Indicator (NDI), Redundancy Version (RV), and the like.

The value stored in the DCI Format field is an information element that specifies the format of the DCI. The value stored in the CI field is an information element that specifies the CC to which the DCI applies. The value stored in the BWP indicator field is an information element that specifies the BWP to which the DCI applies. The BWP that can be specified by the BWP indicator is set by an information element (BandwidthPart-Config) contained in the RRC message. The value stored in the FDRA field is an information element that specifies the frequency domain resource to which the DCI applies. The frequency domain resource is specified by the value stored in the FDRA field and the information element (RA Type) contained in the RRC message. The value stored in the TDRA field is the information element that specifies the time domain resource to which the DCI is applied. The time domain resource is specified by the value stored in the TDRA field and the information element (pdsch-TimeDomainAllocationList, pusch-TimeDomain-AllocationList) contained in the RRC message. The time domain resource may be specified by the value stored in the TDRA field and the default table. The value stored in the MCS field is an information element that specifies the MCS to which the DCI applies. The MCS is specified by the values stored in the MCS and the MCS table. The MCS table may be specified by an RRC message or specified by RNTI scrambling. The value stored in the HPN field is an information element that specifies the HARQ Process to which the DCI is applied. The value stored in the NDI is an information element that identifies whether the data to which the DCI is applied is first-time data. The value stored in the RV field is an information element that specifies the redundancy of the data to which the DCI is applied.

In the embodiment, the control signal and reference signal processing unit 240 constitutes a transmission unit that sends feedback on the data. As described later, the data may include data related to Multicast and Broadcast Services (MBS). As a method for transmitting feedback (HARQ feedback), a first method (NACK-only feedback) for transmitting a negative response (NACK) without transmitting an affirmative response (ACK) and a second method (ACK/NACK feedback) for transmitting both an affirmative response (ACK) and a negative response (NACK) are supported.

The encoding/decoding unit 250 performs data partitioning/concatenation and channel coding/decoding for each predetermined communication destination (gNB100 or other gNB).

Specifically, the encoding/decoding unit 250 divides the data output from the data transmission and reception unit 260 into predetermined sizes and performs channel coding for the divided data. The encoding/decoding unit 250 decodes the data output from the modulation and demodulation unit 230 and concatenates the decoded data.

The data transmission and reception unit 260 transmits and receives the protocol data unit (PDU) and the service data unit (SDU). Specifically, the data transmission and reception unit 260 performs assembly/disassembly of the PDU/SDU in a plurality of layers (Media access control layer (MAC), radio link control layer (RLC), packet data convergence protocol layer (PDCP), etc.). The data transmission and reception unit 260 also performs error correction and retransmission control of data based on HARQ (Hybrid Automatic Repeat Request).

In the embodiment, the data transmission and reception unit 260 comprises a reception unit that receives data via a downlink channel in data delivery for a plurality of terminals. Data delivery for a plurality of terminals may be referred to as Multicast and Broadcast Services (MBS). The downlink channel may include multicast (PDSCH) transmitted by multicast and unicast (PDSCH) transmitted by unicast. In the following, multicast (PDSCH) and unicast (PDSCH) are collectively referred to as multicast/unicast (PDSCH). The reception of multicast/unicast (PDSCH) may be read as the reception of data via multicast/unicast (PDSCH).

The control unit 270 controls each functional block that constitutes UE200. In the embodiment, the control unit 270 comprises a control unit that changes the parameters used for transmitting HARQ feedback according to whether the method for transmitting feedback (HARQ feedback) is the first method (NACK-only feedback) or the second method (ACK/NACK feedback). The parameters may include a parameter (k1) that defines the timing for transmitting feedback. The parameters may include a parameter that defines the power for transmitting feedback.

Second, the functional block configuration of the gNB100 will be described.

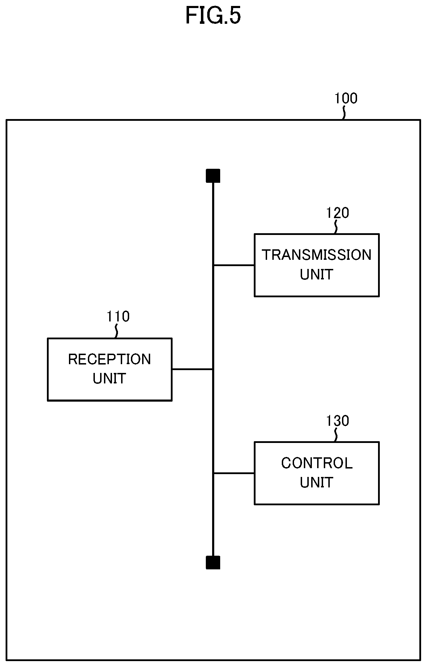

FIG. 5 is a functional block configuration diagram of the gNB100. As shown in FIG. 5, the gNB100 has a reception unit 110, a transmission unit 120, and a control unit 130.

The reception unit 110 receives various signals from the UE200. The reception unit 110 may receive UL signals via PUCCH or PUSCH. In embodiments, the reception unit 110 may receive the feedback described above.

The transmission unit 120 transmits various signals to the UE200. The transmission unit 120 may transmit DL signals via PDCCH or PDSCH. In embodiments, the transmission unit 120 may transmit multicast/unicast (PDSCH) at the MBS. The transmission of multicast/unicast (PDSCH) may be read as transmission of data via multicast/unicast (PDSCH).

The control unit 130 controls gNB100. In the embodiment, the control unit 130 may assume that the parameters used to transmit HARQ feedback are changed by UE200 depending on whether HARQ feedback is NACK-only feedback or ACK/NACK feedback.

(3) Provision of MBS

The radio communication system 10 may provide Multicast and Broadcast Services (MBS).

For example, in a stadium or a hall, a large number of UEs 200 are located in a certain geographical area, and a large number of UEs 200 simultaneously receive the same data. In such a case, it is effective to use MBS instead of unicast.

Unicast may be interpreted as communication performed 1: 1 with the network by specifying a specific UE200 (UE200 specific identification information may be specified).

Multicast may be interpreted as communication performed 1: 1 with the network by specifying a specific plurality of UE200 (multicast identification information may be specified). As a result, the number of UE200 that receive the received multicast data may be one.

Broadcast may be interpreted as a communication between all UE200 and the network in an unspecified number. The multicast/broadcast data may have the same copied content, but some content, such as headers, may be different. Also, although multicast/broadcast data may be transmitted (delivered) simultaneously, it does not necessarily require strict concurrency and may include propagation delays and/or processing delays within RAN nodes.

The target UE200 may be in an idle state (RRC idle), a connected state (RRC connected), or any other state (For example, the inactive state) in the wireless resource control layer (RRC). The inactive state may be interpreted as a state in which some settings of the RRC are maintained.

MBS assumes the following three methods for scheduling multicast/broadcast PDSCH, specifically scheduling MBS packets (which may be read as data). RRC connected UE may be read as RRC idle UE or RRC inactive UE.

- PTM Transmission Method 1 (PTM-1):

  - Schedule group-common PDSCH using group-common PDCCH (Physical Downlink Control Channel) for MBS group of RRC connected UE

  - CRC and PDSCH of PDCCH are scrambled by group-common RNTI (Radio Network Temporary Identifier, may be referred to as G-RNTI)

- PTM Transmission Method 2 (PTM-2):

  - Scheduling group-common PDSCH with UE-specific PDCCH for MBS group of RRC connected UE
  - CRC of PDCCH is scrambled by UE-specific RNTI
  - PDSCH is scrambled by group-common RNTI

- PTP transmission method:

  - Scheduling UE-specific PDSCH with UE-specific PDCCH for RRC connected UE

  - CRC and PDSCH of PDCCH are scrambled by UE-specific RNTI. This may mean that MBS packets are transmitted by unicast

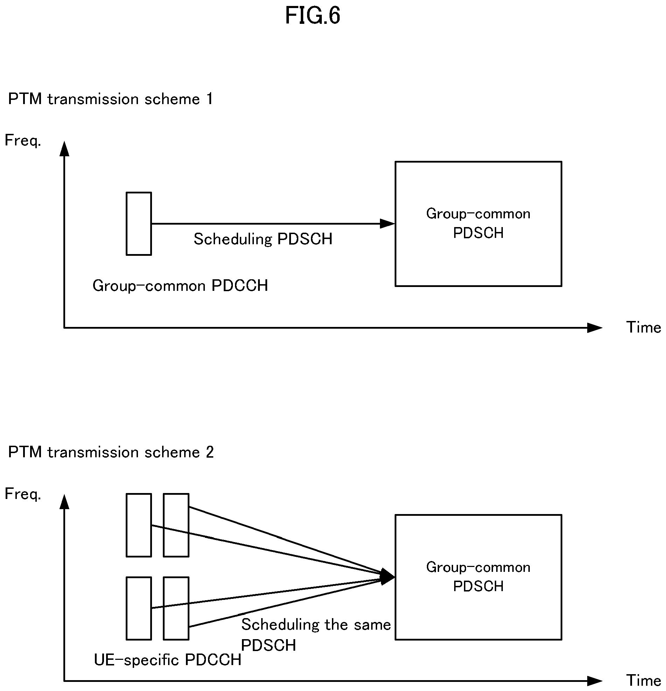

FIG. 6 shows a configuration example of PTM transmission method 1 and PTM transmission method 2. Note that the UE-specific PDCCH/PDSCH can be identified by the target UE but cannot be identified by other UEs in the same MBS group. The group-common PDCCH/PDSCH is transmitted at the same time/frequency resource and can be identified by all UEs in the same MBS group. The names of the PTM transmission methods 1 and 2 are tentative and may be called by different names as long as the operations described above are performed.

In point-to-point (PTP) delivery, the RAN node may wirelessly deliver individual copies of MBS data packets to individual UEs. In point-to-multipoint (PTM) delivery, the RAN node may wirelessly deliver a single copy of MBS data packets to a set of UEs.

In order to improve the reliability of MBS, the following two feedback methods are assumed for HARQ (Hybrid Automatic repeat request) feedback, specifically, HARQ feedback for multicast/broadcast PDSCH.

- Option 1: Feedback of both ACK and NACK (ACK/NACK feedback)

- UE that successfully receives/decrypts PDSCH sends ACK
- UE that fails to receive/decrypt PDSCH sends NACK
- PUCCH (Physical Uplink Control Channel) resource configuration: PUCCH-Config can be configured for multicast
- PUCCH resource: Shared/orthogonal between UEs depends on the network configuration
- HARQ-ACK CB (codebook): Supports type-1 and type-2 (CB decision algorithm specified in 3GPP TS 38.213)
- Multiplexing: Can apply unicast or multicast

- Option 2: NACK-only feedback

- A UE that successfully receives or decrypts PDSCH does not send an ACK (does not send a response)
- A UE that fails to receive or decrypt PDSCH sends a NACK
- For a given UE, PUCCH resource settings can be configured separately by unicast or group cast (multicast)

The ACK may be called a positive acknowledgment, and the NACK may be called a negative acknowledgment. The HARQ may be called an automatic resend request.

For the enable/disable of Option 1 or Option 2, the any one of followings may be applied.

- RRC and Downlink Control Information (DCI)

- RRC only

In addition, the following is expected for semi-persistent scheduling (SPS) for multicast/broadcast PDSCH.

- Adopts SPS group-common PDSCH

- Multiple SPS group-common PDSCH can be configured for UE capability
- HARQ feedback for SPS group-common PDSCH is possible
- At least activation/deactivation via group-common PDCCH (downlink control channel) is possible

Note that deactivation may be replaced with other synonymous terms such as release. For example, activation may be replaced with start, start, trigger, etc., and deactivation may be replaced with end, stop, etc.

SPS is a scheduling used as a contrast to dynamic scheduling and may be referred to as semi-fixed, semi-persistent or semi-persistent scheduling and may be interpreted as Configured Scheduling (CS).

Scheduling may be interpreted as the process of allocating resources to transmit data. Dynamic scheduling may be interpreted as the mechanism by which all PDSCH are scheduled by DCI (For example, DCI 1_0, DCI 1_1, or DCI 1_2). SPS may be interpreted as a mechanism by which PDSCH transmissions are scheduled by higher layer signaling, such as RRC messages.

Also, for the physical layer, there may be a scheduling category of time domain scheduling and frequency domain scheduling.

Also, multicast, group cast, broadcast, and MBS may be interchanged. Multicast PDSCH and PDSCH scrambled by group common RNTI may be interchanged.

Further, data and packet terms may be interchanged and may be interpreted as synonymous with terms such as signal, data unit, etc. and transmission, reception, transmission and delivery may be interchanged.

(4) Changing parameters

As described above, the UE200 changes the parameters used for transmitting the HARQ feedback according to whether the HARQ feedback is NACK-only feedback or ACK/NACK feedback. The parameters may include a parameter (k1) that defines when the feedback is to be transmitted. The parameters may include a parameter that defines the power to transmit the feedback.

(4.1) Timing

The parameter may include a parameter (k1) that defines the timing of sending feedback. k1 is the time offset between the timing of the PDSCH receiving data about the MBS and the timing of sending feedback. The time offset may be defined in units of time (slots, symbols). k1 may be specified by the PDSCH-to-HARQ_feedback timing indicator. The PDSCH-to-HARQ_feedback timing indicator may be included in the DCI. The PDSCH-to-HARQ_feedback timing indicator may be included in any DCI format of DCI format 1_0/1_1/1_2.

The list of k1 (The following k1 List) that may be specified in the PDSCH-to-HARQ_feedback timing indicator may be set with dl-DataToUL-ACK-r16, dl-DataToUL-ACK-DCI-1-2-r16, or with newly defined information elements for the MBS. These information elements may be communicated to the UE200 by an RRC message. The information elements may be referred to as RRC parameters.

Under these assumptions, the following options can be considered as the method of changing (determining) k1.

(4.1.1) First option

In the first option, a k1 List (NACK-only feedback k1 List) used for NACK-only feedback and a k1 List (ACK/NACK feedback k1 List) used for ACK/NACK feedback are defined.

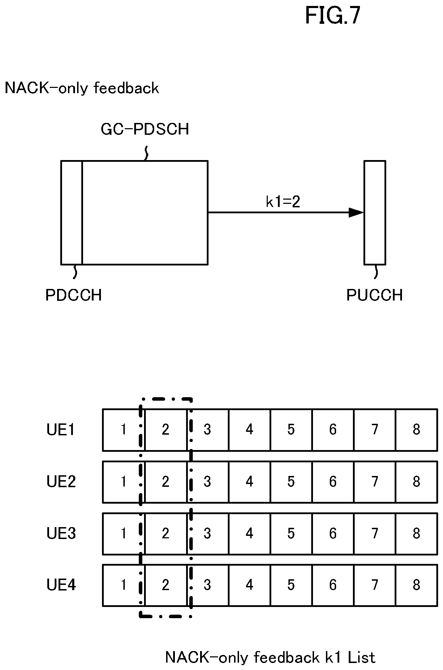

As shown in FIG. 7, in NACK-only feedback, the same k1 (In FIG. 7, k1=2) may be used by the UE200 that receives data on the MBS. In such a case, the same k1 List may be used by the UE200 as the NACK-only feedback k1 List. FIG. 7 illustrates a case where the second k1 of the k1 List is specified by the PDSCH-to-HARQ_feedback timing indicator.

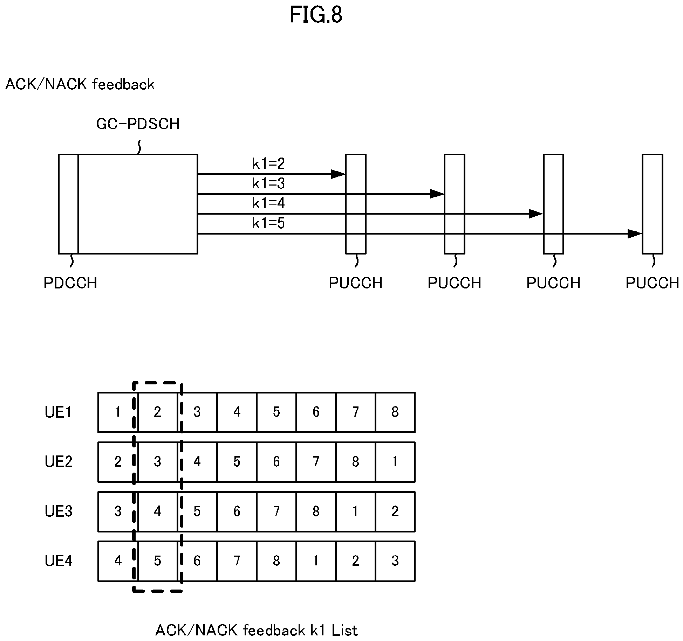

As shown in FIG. 8, the ACK/NACK feedback may use a k1 (In FIG. 8, k1=2, k1=3, k1=4, k1=5) with a different UE200 that receives data about the MBS. In such a case, a different k1 List may be used for each UE200 as the ACK/NACK feedback k1 List. FIG. 8 illustrates a case where the second k1 of the k1 List is specified by the PDSCH-to-HARQ_feedback timing indicator.

In the first option, the NACK-only feedback k1 List may be set by a newly defined information element for the MBS. The ACK/NACK feedback k1 List may be set by an existing information element (For example, dl-DataToUL-ACK-r16, dl-DataToUL-ACK-DCI-1-2-r16).

In such a case, the UE200 may determine k1 based on an existing information element when performing pre-Release 16 operations. The UE200 may determine k1 based on an existing information element when performing ACK/NACK feedback in Release 17 and later operations. On the other hand, the UE200 may determine k1 based on a newly defined information element when performing NACK-only feedback in Release 17 and later operations.

In FIG. 7, as the NACK-only feedback k1 List, a case in which the same k1 List is used in 2 or more UE200 is exemplified, but the embodiment is not limited thereto. As the NACK-only feedback k1 List, a different k1 List may be used for each UE200.

Similarly, FIG. 8 illustrates a case in which a different k1 List is used for each UE200 as the ACK/NACK feedback k1 List, but the embodiment is not limited thereto. As the ACK/NACK feedback k1 List, the same k1 List may be used for 2 or more UEs 200.

(4.1.2) Second option

In the second option, the k1 List (NACK-only feedback k1 List) used for NACK-only feedback is defined, and the k1 List (ACK/NACK feedback k1 List) used for ACK/NACK feedback may be defined by an offset to the NACK-only feedback k1 List. For example, the ACK/NACK feedback k1 List may be defined by adding different offsets for each UE200.

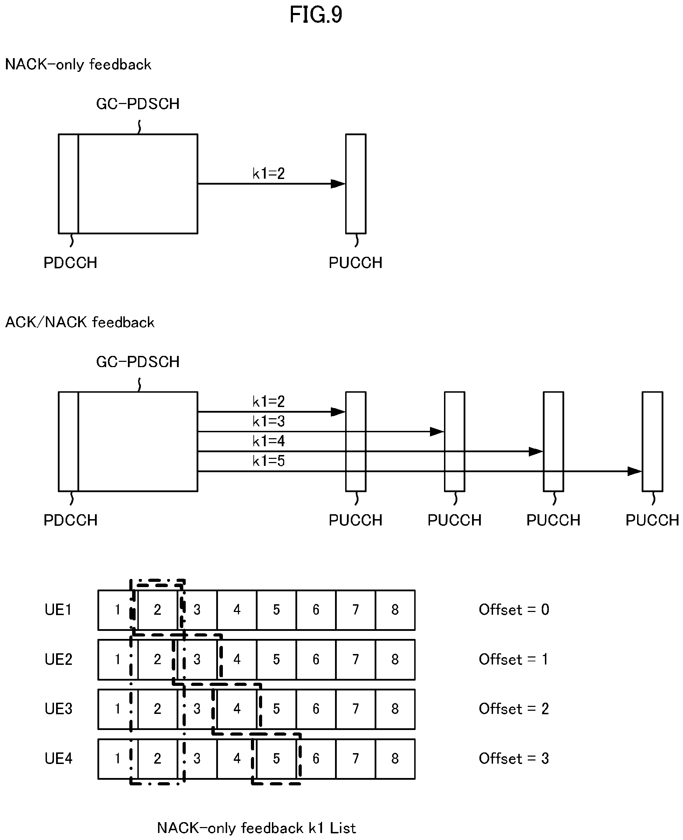

As shown in FIG. 9, for NACK-only feedback, the same k1 (In FIG. 7, k1=2) may be used for the UE200 that receives data about the MBS. In such a case, the same k1 List may be used for the UE200 as the NACK-only feedback k1 List. FIG. 9 illustrates a case where the second k1 of the k1 List is specified by the PDSCH-to-HARQ_feedback timing indicator.

As shown in FIG. 9, in the ACK/NACK feedback, k1 (In FIG. 8, k1=2, k1=3, k1=4, k1=5) may be used, in which the UE200 for receiving data on the MBS is different. In such a case, as the ACK/NACK feedback k1 List, a k1 List in which an offset different for each UE200 is added to the NACK-only feedback k1 List may be used. FIG. 9 illustrates a case in which the second k1 of the k1 List is specified by the PDSCH-to-HARQ_feedback timing indicator.

In the second option, the ACK/NACK feedback k1 List is defined by adding an offset to the NACK-only feedback k1 List. The offset may be a value defined per k1 List or per UE200. In addition, the ACK/NACK feedback k1 List may be defined by adding the offset to the NACK-only feedback k1 List followed by a mod operation.

In the second option, the NACK-only feedback k1 List may be set by an existing information element (For example, dl-DataToUL-ACK-r16, dl-DataToUL-ACK-DCI-1-2-r16). The NACK-only feedback k1 List may be set by newly defined information elements for the MBS.

The offset may be set by an upper layer (For example, RRC parameters, MAC CE), may be predefined in the radio communication system 10, and may be reported in UE Capability.

(4.1.3) Third Option

In the third option, the k1 List (ACK/NACK feedback k1 List) used for ACK/NACK feedback is defined, and the k1 List (NACK-only feedback k1 List) used for NACK-only feedback may be defined by an offset to the ACK/NACK feedback k1 List.

In the third option, the NACK-only feedback k1 List is defined by adding an offset to the ACK/NACK feedback k1 List. The offset may be a value defined per k1 List or a value defined per UE200. In addition, the NACK-only feedback k1 List may be defined by adding the offset to the ACK/NACK feedback k1 List followed by a mod operation.

In the second option, the ACK/NACK feedback k1 List may be set by an existing information element (For example, dl-DataToUL-ACK-r16, dl-DataToUL-ACK-DCI-1-2-r16). The ACK/NACK feedback k1 List may be set by a newly defined information element for the MBS.

The offset may be set by an upper layer (For example, RRC parameters, MAC CE), may be predefined in the radio communication system 10, and may be reported in UE Capability.

(4.2) Power

The parameters may include parameters that define the power to transmit feedback. For example, the power control of the PUCCH to transmit feedback is controlled according to the following formula (e.g., 3GPP TS38.213 § 7.2.1):

[Equation 1]

$$P_{\text{PUCCH},b,f,c}(i,q_u,q_d,l) = \min \left\{ \begin{array}{l} P_{\text{CMAX},f,c}(i), \\ P_{\text{O\_PUCCH},b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array} \right\}$$

- $P_{\text{CMAX},f,c}(i)$ is the maximum transmission power used for PUCCH transmission occasion "i" regarding the carrier "f" of the primary cell "c".
- $P_{\text{0 PUCCH},b,f,c}(q_u)$ is an offset used for UL BWP "b" of the carrier "f" of the primary cell "c".
- $M_{\text{RB},b,f,c}^{\text{PUCCH}}(i)$ is a bandwidth of PUCCH, and expressed by the number of RB(s) used for PUCCH transmission occasion "i" regarding the carrier "f" of the primary cell "c".
- $PL_{b,f,c}(q_d)$ is a pathloss used for UL BWP "b" of the carrier "f" of the primary cell "c".
- $\Delta_{\text{F\_PUCCH}}(F)$ is an offset depending on the PUCCH format.
- $\Delta_{\text{TF},b,f,c}(i)$ is a component adjusting the transmission power of 'PUCCH used for PUCCH transmission occasion "i" regarding UL BWP "b" of the carrier "f" of the primary cell "c".
- $g_{b,f,c}(i,l)$ is a modification value used for the closed loop process "l" of PUCCH transmission occasion "i" regarding UL BWP "b" of the carrier "f" of the primary cell "c".

Under these assumptions, the following options can be considered as a method for changing (determining) the parameters that define power.

(4.2.1) PUSCH power control

In the first option, the parameters that define the power to transmit feedback may include parameters related to the power control of the PUCCH that transmits feedback. The parameters may be parameters (For example, Reference RSs for measuring Delta, Po, pathloss) that define each of the items shown in the above equation.

For example, the parameters used in NACK-only feedback (Hereinafter, the first power parameter) may be defined separately from the parameters used in ACK/NACK feedback (Hereinafter, the second power parameter). The first power parameter and the second power parameter may be set separately.

In the first option, the first power parameter may be set by a newly defined information element for the MBS. The second power parameter may be set by an existing information element.

In such a case, the UE200 may determine the transmit power based on an existing information element when performing pre-Release 16 operations. The UE200 may determine the transmit power based on an existing information element when performing ACK/NACK feedback in Release 17 and later operations. On the other hand, the UE200 may determine the transmit power based on a newly defined information element when performing NACK-only feedback in Release 17 and later operations.

These information elements may be notified to the UE200 by an RRC message. The information element may be referred to as an RRC parameter.

(4.2.2) Adjustment state of closed loop control

In the second option, the parameter defining the power to send feedback may include the adjustment state of the PUCCH closed loop control to send feedback. The adjustment state may mean the $P_{PUCCHb,f,c}(l,_{qu},q_d,l)$ calculated by the above formula.

Specifically, the adjustment state used in NACK-only feedback may be defined separately from the adjustment state in ACK/NACK feedback.

(4.2.3) TPC command

In the third option, the parameter defining the power to send feedback may be the TPC command used in the closed loop control of the PUCCH that sends feedback.

Specifically, the TPC command used in NACK-only feedback may be defined separately from the TPC command in ACK/NACK feedback. For example, the TPC command may include a GC-TPC command (DCI format 2_2). The GC-TPC command may be used with closed loop control for NACK-only feedback, or with closed loop control for ACK/NACK feedback. The GC-TPC command may be used for NACK-only feedback, or for ACK/NACK feedback, may be set by a higher layer (For example, RRC parameters, MAC CE), may be predefined in the radio communication system 10, and may be reported in UE Capability.

The second option may be realized by utilizing the third option.

(5) Switching method

NACK-only feedback and ACK/NACK feedback may be switched as follows.

First, NACK-only feedback and ACK/NACK feedback may be switched by an Indication set in a field included in the DCI. The Indication may be set explicitly by a newly defined field or implicitly by a combination of existing fields.

Second, NACK-only feedback and ACK/NACK feedback may be switched by an RNTI that scrambles the CRC of the DCI.

Third, NACK-only feedback and ACK/NACK feedback may be switched by one or more parameters selected from PDCCH monitoring occasion, CORSET, Search Space, and CCE Index.

Fourth, NACK-only feedback and ACK/NACK feedback may be switched by the type of DCI format.

Fifth, NACK-only feedback and ACK/NACK feedback may be switched by Indication by Group-common PDCCH.

Sixth, NACK-only feedback and ACK/NACK feedback may be switched by Indication by MAC CE.

Seventh, NACK-only feedback and ACK/NACK feedback may be switched by at least one of the Carrier type used to transmit DCI and the Cell type to transmit DCI.

Eighth, NACK-only feedback and ACK/NACK feedback may be switched by the PDSCH resource (At least one or more of the following resources: time, frequency, code, space, carrier, cell) that notifies DCI.

Ninth, NACK-only feedback and ACK/NACK feedback may be switched by the HARQ process number.

10. NACK-only feedback and ACK/NACK feedback may be switched by the size of the UCI containing the feedback (For example, the number of bits).

11. NACK-only feedback and ACK/NACK feedback may be switched by whether the UCI containing the feedback contains information other than HARQ-ACK.

12. NACK-only feedback and ACK/NACK feedback may be switched by whether the UCI containing the feedback contains information other than UCI about the MBS.

Note that NACK-only feedback and ACK/NACK feedback may be switched by a combination of 2 or more selected from the above conditions.

(6) Operational effects

In the embodiment, the UE200 changes the parameters used for transmitting HARQ feedback according to whether the HARQ feedback is NACK-only feedback or ACK/NACK feedback. With such a configuration, HARQ feedback can be properly executed by using different parameters.

For example, depending on whether HARQ feedback is NACK-only feedback or ACK/NACK feedback, the parameter (k1) defining the timing for sending feedback is used differently, so that feedback can be sent at an appropriate timing depending on the type of HARQ feedback.

For example, depending on whether HARQ feedback is NACK-only feedback or ACK/NACK feedback, the parameter defining the power for sending feedback is used differently, so that feedback can be sent at an appropriate power depending on the type of HARQ feedback.

**(7) Other Embodiments**

Although the contents of the present invention have been described in accordance with the above embodiments, it is obvious to those skilled in the art that the present invention is not limited to these descriptions but can be modified and improved in various ways .

Although not specifically mentioned in the above disclosure, in MBS, PDSCH (unicast) and PDSCH (multicast) may be multiplexed by time division. PDSCH (unicast) may be referred to as TDMed PDSCH (unicast), and PDSCH (multicast) may be referred to as TDMed PDSCH (multicast). MBS may support frequency division multiplexing of TDMed PDSCH (unicast) and TDMed PDSCH (multicast), and may support frequency division multiplexing of TDMed PDSCH (multicast).

The block diagram (FIGS. 4 and 5) used in the description of the above embodiment shows blocks of functional units. Those functional blocks (structural components) can be realized by a desired combination of at least one of hardware and software. Means for realizing each functional block is not particularly limited. That is, each functional block may be implemented using a single device that is physically or logically coupled, or two or more devices that are physically or logically separated may be directly or indirectly (For example, using wire, wireless, etc.) connected and implemented using these multiple devices. The functional block may be implemented using the single device or the multiple devices combined with software.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that functions transmission is called a transmission unit (transmitting unit) or a transmitter. As described above, the method of realization of both is not particularly limited.

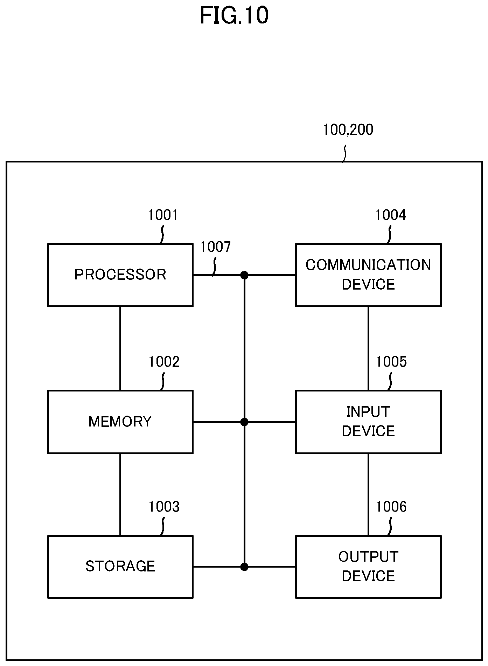

In addition, the above-mentioned gNB100 and UE200 (the device) may function as a computer for processing the radio communication method of the present disclosure. FIG. 10 is a diagram showing an example of a hardware configuration of the device. As shown in FIG. 10, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. The hardware configuration of the device may be configured to include one or more of the devices shown, or may be configured without some of the devices.

Each functional block of the device (see FIG. 4) is realized by any hardware element or combination of hardware elements of the computer device.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU), including interfaces to peripheral devices, controls, computing devices, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. In addition, the various processes described above may be performed by one processor 1001 or may be performed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to the embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

In addition, the device may be configured to include hardware such as a microprocessor, a digital signal processor (DSP), an application specific integrated circuit (ASIC), a programmable logic device (PLD), a field programmable gate array (FPGA), etc., which may provide some or all of each functional block. For example, the processor 1001 may be implemented by using at least one of these hardware.

Information notification is not limited to the aspects/embodiments described in the present disclosure and may be performed using other methods. For example, information notification may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or combinations thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc. of the embodiments/embodiments described in the present disclosure may be rearranged as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. It is apparent that in a network consisting of one or more network nodes having a base station, the various operations performed for communication with the terminal may be performed by at least one of the base station and other network nodes (Examples include, but are not limited to, MME or S-GW.) other than the base station. In the above, an example in which there is one network node other than the base station is explained; however, a combination of a plurality of other network nodes (for example, MME and S-GW) may be used.

Information, signals (information, etc.) may be output from a higher layer (or lower layer) to a lower layer (or higher layer). It may be input and output via a plurality of network nodes.

The input/output information can be stored in a specific location (for example, a memory) or can be managed in a management table. The input and output information may be overwritten, updated, or added. The information can be deleted after outputting. The inputted information can be transmitted to another device.

The determination may be based on a value represented by a single bit (0 or 1), a true or false value (Boolean: true or false), or a numerical comparison (For example, comparison with a given value).

Each of the aspects/embodiments described in the present disclosure may be used alone, in combination, or alternatively in execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, if software is transmitted from a website, server, or other remote source using at least one of wired technology (Coaxial, fiber-optic, twisted-pair, and digital subscriber lines (DSL)) and wireless technology (Infrared, microwave, etc.), at least one of these wired and wireless technologies is included within the definition of a transmission medium.

Information, signals, or the like mentioned above may be represented by using any of a variety of different technologies. For example, data, instructions, commands, information, signals, bits, symbols, chips, etc. that may be referred to throughout the above description may be represented by voltage, current, electromagnetic waves, magnetic fields or magnetic particles, optical fields or photons, or any combination thereof.

The terms described in the present disclosure and those necessary for understanding the present disclosure may be replaced with terms having the same or similar meanings. For example, at least one of a channel and a symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station may contain one or more (For example, three) cells, also called sectors. In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a base station performing communication services in this coverage and to a portion or the entire coverage area of at least one of the base station subsystems.

In the present disclosure, the terms "mobile station (Mobile Station: MS)," "user terminal," "user equipment (User Equipment: UE)," "terminal" and the like can be used interchangeably.

A mobile station may also be referred to by one of ordinary skill in the art as a subscriber station, mobile unit, subscriber unit, wireless unit, remote unit, mobile device, wireless device, radio communication device, remote device, mobile subscriber station, access terminal, mobile terminal, wireless terminal, remote terminal, handset, user agent, mobile client, client, or some other appropriate term.

At least one of a base station and a mobile station may be called a transmitting device, a receiving device, a communication device, or the e like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base station. In this case, the base station may have the function of the mobile stat ion.

The radio frame may be composed of one or more frames in the time domain. Each frame or frames in the time domain may be called a subframe.

The subframes may also be composed of one or more slots in the time domain. The subframes may be of a fixed time length (For example, 1 ms) independent of numerology.

The numerology may be a communication parameter applied to at least one of the transmission and reception of a signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may consist of one or more symbols (Orthogonal Frequency Division Multiplexing (OFDM)) symbols, Single Carrier Frequency Division Multiple Access (SC-FDMA) symbols, etc., in tin the time domain. A slot may be a unit of time based on the numerology.

A slot may include a plurality of minislots. Each minislot may be composed of one or more symbols in the time domain. A minislot may also be called a subslot. A minislot may be composed of fewer symbols than slots. PDSCH (or PUSCH) transmitted in units of time greater than the minislot may be referred to as PDSCH (or PUSCH) mapping type A. PDSCH (or PUSCH) transmitted using the minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be referred to as a transmission time interval (TTI), a plurality of consecutive subframes may be referred to as a TTI, and one slot or minislot may be referred to as a TTI. That is, at least one of the subframes and the TTI may be a subframe in an existing LTE (1 ms), a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called a TTI, one or more TTIs (That is, one or more slots or one or more minislots) may be the minimum time unit for scheduling. The number of slots (number of minislots) constituting the minimum time unit for scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTIs shorter than the normal TTI may be referred to as shortened TTI, short TTI, partial or fractional TTI, shortened subframe, short subframe, minislot, subslot, slot, etc.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a time domain and frequency domain resource allocation unit and may include one or more consecutive subcarriers in the frequency domain. The number of subcarriers included in RB may be, for example, twelve, and the same regardless of the topology. The number of subcarriers included in the RB may be determined based on the neurology.

The time domain of the RB may also include one or more symbols and may be one slot, one minislot, one subframe, or one TTI in length. The one TTI, one subframe, and the like may each consist of one or more resource blocks.

The one or more RBs may be called physical resource blocks (PRBs), sub-carrier groups (SCGs), resource element groups (REGs), PRB pairs, RB pairs, and the like.

The resource blocks may be composed of one or more resource elements (REs). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). For the UE, one or more BWPs may be set in one carrier.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in the radio frame, the number of slots per subframe or radio frame, the number of minislots included in the slot, the number of symbols and RBs included in the slot or minislot, the

EP 4 391 642 A1

number of subcarriers included in the RB, and the number of symbols in the TTI, the symbol length, the cyclic prefix (CP) length, and the like can be varied.

The terms "connected" and "coupled," or any variation thereof, mean any direct or indirect connection or coupling between two or more elements, and can include the presence of one or more intermediate elements between two elements "connected" or "coupled" to each other. The connection or coupling between elements may be physical, logical, or a combination thereof. For example, "connection" may be read as "access." As used in the present disclosure, two elements may be considered to be "connected" or "coupled" to each other using at least one of one or more wire, cable, and printed electrical connections and, as some non-limiting and non-inclusive examples, electromagnetic energy having wavelengths in the radio frequency, microwave, and optical (both visible and invisible) domains.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to elements using designations such as "first" and "second" as used in this disclosure does not generally limit the quantity or order of those elements. Such designations can be used in the present disclosure as a convenient way to distinguish between two or more elements. Accordingly, references to first and second elements do not mean that only two elements may be employed therein, or that the first element must in any way precede the second element.

In the present disclosure, the used terms "include," "including," and variants thereof are intended to be inclusive in a manner similar to the term "comprising." Furthermore, it is intended that the term "or" as used in the present disclosure is not an exclusive OR.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

[Explanation of Reference Numerals]

| | |
|---|---|
| 10 | Radio communication system |
| 20 | NG-RAN |
| 100 | gNB |
| 110 | Reception unit |
| 120 | Transmission unit |
| 130 | Control unit |
| 200 | UE |
| 210 | Radio signal transmission/reception unit |
| 220 | Amplifier unit |
| 230 | Modulation/demodulation unit |
| 240 | Control signal/reference signal processing unit |
| 250 | Encoding/decoding unit |

| 260 | Data transmission/reception unit |
|---|---|
| 270 | Control unit |
| 1001 | Processor |
| 1002 | Memory |
| 1003 | Storage |
| 1004 | Communication device |
| 1005 | Input device |
| 1006 | Output device |
| 1007 | Bus |

**Claims**

1. A terminal comprising:

   a reception unit that receives data via a downlink channel in a data delivery for a plurality of terminals;
   a transmission unit that transmits a feedback on the data; and
   a control unit that changes a parameter used for transmitting the feedback according to whether a method for transmitting the feedback is a first method or a second method, wherein
   the first method is a method for transmitting a negative response without transmitting an affirmative response, and
   the second method is a method for transmitting the affirmative response and the negative response.

2. The terminal of claim 1, wherein
   the parameter is a parameter that defines the timing for transmitting the feedback.

3. The terminal of claim 1, wherein
   the parameter is a parameter that defines a power for transmitting the feedback.

4. A radio communication method comprising:

   a step A of receiving data via a downlink channel in a data delivery for a plurality of terminals;
   a step B of transmitting a feedback on the data; and
   a step C of changing a parameter used for transmitting the feedback according to whether a method for transmitting the feedback is a first method or a second method; wherein
   the first method is a method for transmitting a negative response without transmitting an affirmative response, and
   the second method is a method for transmitting the affirmative response and the negative response.

FIG.1

## FIG.2

FR1
[15,30,60] kHz SCS
5~100 MHz BW

FR2
[60,120,(240)] kHz SCS
50~400 MHz BW

FR2x

0.41 GHz  1 GHz  7.125 GHz  10 GHz  24.25 GHz  52.6 GHz  71 GHz  100 GHz

f

# FIG.3

Radio Frame (10ms)

| #0 | #1 | #2 | #3 | #4 | #5 | #6 | #7 | #8 | #9 |

Sub frame (1ms)

t

Sub-Carrier Spacing

Slot (14-symbol)

15kHz

| #0 | #1 | #2 | #3 | #4 | #5 | #6 | #7 | #8 | #9 | #10 | #11 | #12 | #13 |

Slot (14-symbol)

30kHz

Slot (14-symbol)

60kHz

Slot (14-symbol)

120kHz

Slot (14-symbol)

240kHz

FIG.4

EP 4 391 642 A1

FIG.5

100

120

TRANSMISSION
UNIT

110

RECEPTION
UNIT

130

CONTROL
UNIT

# FIG.6

PTM transmission scheme 1

PTM transmission scheme 2

# FIG.7

NACK-only feedback

GC-PDSCH

PDCCH

k1=2

PUCCH

| UE1 | 1 | 2 | 3 | 4 | 5 | 6 | 7 | 8 |
| UE2 | 1 | 2 | 3 | 4 | 5 | 6 | 7 | 8 |
| UE3 | 1 | 2 | 3 | 4 | 5 | 6 | 7 | 8 |
| UE4 | 1 | 2 | 3 | 4 | 5 | 6 | 7 | 8 |

NACK-only feedback k1 List

## FIG.8

ACK/NACK feedback

GC-PDSCH

PDCCH

k1=2
k1=3
k1=4
k1=5

PUCCH   PUCCH   PUCCH   PUCCH

| UE1 | 1 | 2 | 3 | 4 | 5 | 6 | 7 | 8 |
| UE2 | 2 | 3 | 4 | 5 | 6 | 7 | 8 | 1 |
| UE3 | 3 | 4 | 5 | 6 | 7 | 8 | 1 | 2 |
| UE4 | 4 | 5 | 6 | 7 | 8 | 1 | 2 | 3 |

ACK/NACK feedback k1 List

# FIG.9

NACK-only feedback

GC-PDSCH

k1=2

PDCCH                    PUCCH

ACK/NACK feedback

GC-PDSCH

k1=2
k1=3
k1=4
k1=5

PDCCH              PUCCH        PUCCH        PUCCH        PUCCH

| UE1 | 1 | 2 | 3 | 4 | 5 | 6 | 7 | 8 | Offset = 0 |
| UE2 | 1 | 2 | 3 | 4 | 5 | 6 | 7 | 8 | Offset = 1 |
| UE3 | 1 | 2 | 3 | 4 | 5 | 6 | 7 | 8 | Offset = 2 |
| UE4 | 1 | 2 | 3 | 4 | 5 | 6 | 7 | 8 | Offset = 3 |

NACK-only feedback k1 List

# FIG.10

100,200

PROCESSOR 1001

1007

COMMUNICATION DEVICE 1004

MEMORY 1002

INPUT DEVICE 1005

STORAGE 1003

OUTPUT DEVICE 1006

## INTERNATIONAL SEARCH REPORT

| International application No. |
| --- |
| **PCT/JP2022/030913** |

**A.    CLASSIFICATION OF SUBJECT MATTER**

*H04W 28/04*(2009.01)i; *H04W 4/06*(2009.01)i; *H04W 52/18*(2009.01)i
FI:    H04W28/04 110; H04W4/06 150; H04W52/18

According to International Patent Classification (IPC) or to both national classification and IPC

**B.    FIELDS SEARCHED**

Minimum documentation searched (classification system followed by classification symbols)

H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | VIVO, Discussion on time and frequency synchronization enhancements on NB-IoT/eMTC for NTN [online], 3GPP TSG RAN WG1 #106-e R1-2106633, 07 August 2021, pp. 1-4<br>pp. 2-4 | 1, 3, 4 |
| Y | pp. 2-4 | 2 |
| Y | WO 2021/152805 A1 (NTT DOCOMO INC.) 05 August 2021 (2021-08-05)<br>paragraph [0038] | 2 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 August 2022** | **06 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/030913**

| Patent document cited in search report | Publication date (day/month/year) | Patent family member(s) | Publication date (day/month/year) |
|---|---|---|---|
| WO 2021/152805 A1 | 05 August 2021 | (Family: none) | |

**REFERENCES CITED IN THE DESCRIPTION**

**Non-patent literature cited in the description**

• New Work Item on NR support of Multicast and Broadcast Services. *RP-193248, 3GPP TSG RAN Meeting #86, 3GPP,* December 2019